# EUROPEAN PATENT SPECIFICATION

(11) **EP 0 802 040 B1**
(45) Date of publication and mention of the grant of the patent: **19.09.2001**
(21) Application number: 97830142.2
(22) Date of filing: 25.03.1997
(51) Int. Cl.: B29D 31/515

(54) **Injection moulding process for soles in expansible and cross-linking "Eva" based compounds**
Verfahren und EVA-Spritzgussmasse für die Herstellung von Sohlen
Procédé et composé EVA de moulage par injection pour la manufacture de semelles moulées

(30) Priority: 19.04.1996 IT AN960008
(43) Date of publication of application: 22.10.1997
(73) Proprietor: Finproject - S.P.A., Roma (IT)
(72) Inventor: Bisconti, Bruno, Civitanova Marche (MC) (IT)
(74) Representative: Baldi, Claudio

(56) References cited:
- WO-A-83/03528
- FR-A- 2 628 300
- US-A- 5 352 105

## Description

This patent application concerns an injection moulding process for soles in expansible and cross-linking "EVA" based compounds.

The patent protection is also extended to the sole obtained with the process according to the invention.

The abbreviation "EVA" refers to "vinyl-acetate ethylene copolymer" which, according to the type of additive used, may be thermoplastic or expansible and cross-linking.

FR 2 628 300 patent refers to a moulding process for soles produced with thermoplastic synthetic material, such as PVC; said soles are provided with an insert made of soft and light material produced with EVA, which is housed in a suitable housing provided, if necessary, on the upper surface of the sole.

The above mentioned process is characterised in that said EVA insert is located inside said housing immediately after the mould is opened, when the sole is still hot, so that said insert finely remains embedded in its housing thanks to the simple shrinkage of the PVC during the cooling phase of the sole.

Therefore, the above mentioned French patent describes a process in which the insert has a function which is completely different from that of the template applied in the process according to the invention.

As a matter of fact, in the French patent the insert is destined to remain embedded inside the sole and the cooling of the PVC is exploited in order to embed said insert into its housing, without the necessity of applying other fixing means, such as adhesives.

In the moulding process according to the invention, instead, the template only serves for preventing the spontaneous shrinkage of the sole, until the sole itself has become completely cold and has reached a stable position; after that, the template itself must be detached from the sole in order to be used again during the subsequent moulding phase.

In the French patent the sole is moulded in PVC, while the insert is made of soft and light EVA, since said insert must constitute the supporting surface of the foot.

In the moulding process according to the invention, instead, the sole is made of soft and light EVA, while the template must consist of a thin flexible plate made of rigid material.

The rigidity of the material is imposed by the condition that the template must not lose its shape when it is closed inside the perimeter edge of the sole in process of cooling, so that the template can efficaciously prevent the shrinkage of the sole.

At the same time, said template must be flexible since it must be moulded in order to become similar to the profile of the upper surface of the sole and then it must be placed over the sole, inside the above mentioned perimeter edge.

This means that, once a rigid material has been chosen, one has to use a plate made of said rigid material whose thickness is thin enough to make the plate flexible.

For example, the template in question should consist of a thin plate of PVC.

In conclusion, said French patent does not include any teaching concerning the way of controlling the shrinkage of a sole moulded in expansible and cross-linking EVA, during the cooling phase, since the sole described in said patent is moulded in PVC which is a material that, during the shrinkage, behaves in a way which completely differs from that of the expansible and cross-linking EVA.

In the case of the latter type, an expanding powder additive is used which decomposes at a specific temperature to produce gases which give rise to a typical phenomenon which occurs in injection moulding using this type of "EVA", consisting of the instantaneous expansion of the part as soon as the mould is opened.

In particular the dimensions of the part increase rapidly while the proportions and shape remain unaltered thus maintaining a ratio of perfect similarity with the impression of the matrix.

Expansible and cross-linking "EVA", thanks above all to its low cost, is widely used in the footwear sector for the production of inexpensive injection moulded soles.

It is not however currently possible with this material to mould soles with a raised trim along the sides since the expansion of the part when the mould is opened requires the perimeter of the sole to be milled in order to reduce the sole to the necessary dimensions.

In other words, since it is not possible to control this expansion precisely, it is currently necessary to dimension - according to the expansion ratio of the material and that of its shrinkage during cooling - the impression of the mould so that the cooled moulded sole is slightly oversized with respect to the nominal dimensions of the sole sizes in question, which are obtained by milling away a surface layer of material along the entire perimeter of the sole.

It is thus obvious why this material and moulding system can not be used for soles which have a raised trim, such as a welt, a part or all of which would be removed when the sides of the sole are milled.

The purpose of this invention is to design an injection moulding process for soles made of expansible and cross-linking "EVA" that makes it possible to produce a perfectly sized sole and to eliminate the costs and limitations of the milling which is currently necessary to size soles made of expansible and cross-linking "EVA" compounds.

The process according to the invention derives from an idea for a solution which is, in general terms, exactly opposite to that on which current production techniques are based.

According to this innovative idea, based on the expansion ratio of the material and that of its shrinkage during cooling, the impression of the mould is designed so that the moulded sole is slightly undersized after cooling and shrinkage with respect to the nominal dimensions of the size in question, which are however strictly respected by arresting the spontaneous shrinkage of the sole during cooling.

For this purpose, the process according to the invention involves the use of a template consisting of a thin and flexible plate from whose bottom edge project a series of perimeter pin elements thank to which said template may be joined integrally or coupled with the sole, which is in turn provided on its upper surface with a series of perimeter holes corresponding to the above pin elements. It follows that the coupling of the sole and template must occur before the cooling process of the sole is completed and when said series of holes, drawn together by the gradual shrinkage of the sole during cooling, are positioned exactly over the template pin elements, which after housing into the respective holes, prevent any further shrinkage of the sole, whose dimensions reduce no further either during or after cooling.

For major clarity the description of the process according to the invention continues with reference to the enclosed drawings which are intended for purposes of illustration and not in a limiting sense and which schematically show the moulded sole before and after shrinkage following cooling, whereby:
- fig. 1 is a cross-section along a longitudinal plane of the sole injected with expansible and cross-linking "EVA" compounds immediately off the mould in maximum expansion dimensions;
- fig. 2 is a view from the bottom of the above template designed to arrest the shrinkage of the sole during the post-moulding stage;
- fig. 3 is a cross-section of the sole in fig. 2 along a longitudinal plane III-III;
- fig. 4 is a view of the template positioned on the sole both cross-sectioned along a longitudinal plane;
- fig. 5 is a cross-section along a longitudinal plane, of the sole produced with the moulding system according to the invention.

Before describing the operating stages of the moulding process according to the invention, it is important to remember that in order to realise the process according to the invention, the impression of the sole must be designed to ensure that the sole off the mould after complete and spontaneous shrinkage is slightly undersized with respect to the nominal dimensions of the size in question.

Moreover the impression of the mould must be designed so that the sole regardless of its shape or pattern of the treading surface and its sides, has a a series of perimeter holes on its upper surface.

This being so, the actual moulding process is attained according to current technology by injecting granules of expansible and cross-linking "EVA" compound into a mould, maintained at a specific temperature to ensure that during the time the material remains in the mould, cross-linking and decomposition of the expanding fillers, occur.

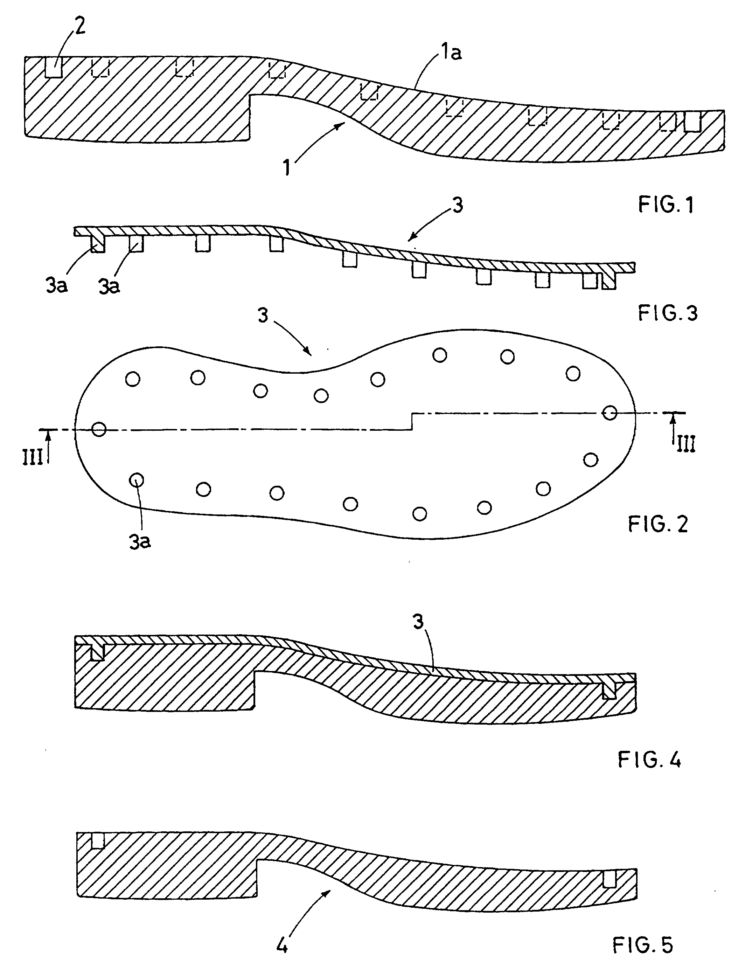

This conventional moulding phase produces a sole of the type illustrated in figure 1 which, as mentioned above, shows the sole in the maximum dimensions of expansion, that the sole attains immediately the mould is opened.

As can be seen in figure 1, sole (1) is characterised by a series of perimeter holes (2) along its upper surface (1a).

The process according to the invention provides that the sole (1) during cooling is coupled by a template (3) consisting of a thin flexible plate made of rigid material such as rigid P.V.C., having a profile similar to that of the sole (1) with a series of pin elements (3a) projecting from its bottom surface corresponding to the series of holes (2) on sole (1), and into which, before completion of the cooling process, the corresponding pin elements (3a) of the template (3) house, in this way preventing any further shrinkage of the sole, whose dimensions reduce no further either during or after cooling.

After cooling, the pin elements (3a) of the template (3) are detached from the corresponding holes (2) on the sole.

The sole (4) thus obtained, is shown in fig. 5, with the same shape but reduced dimensions with respect to the sole (1) shown in figure 1.

Finally, in order to ensure the entry of the pin elements (3a) of the template (3) into the holes (2) on the sole (1), the process according to the invention provides that a pressure be created on the template (3), during cooling, by suitable means. the most convenient and simplest of which may consist of small weights placed on the template (3).

## Claims

1. An injection moulding process for soles produced with expansible and cross-linking "EVA" based compounds having the steps
- expansible and cross-linking "EVA" based compound granules are injected into a mould whose impression is on one hand sized to ensure that the sole (1) after spontaneous and complete shrinkage, is slightly undersized with respect to the nominal dimensions of the sole size in question, and on the other hand is designed so that said moulded sole has a series of perimeter holes (2) on its upper surface.
- a template (3), consisting of a thin flexible plate made of a material having a rigidity comparable to rigid PVC, said template having a profile similar to that of the sole (1) provided on its bottom surface with a series of pin elements (3a) designed to fit into the corresponding series of holes (2) of the sole (1), is coupled on the upper surface of the sole (1) when the sole itself is still hot and the cooling phase has just started;
- said pin elements (3a) remain in the holes (2) until the cooling process of the sole is completed;
- said pin elements (3a) of the template (3) are extracted from the holes(2) after cooling.

2. A process according to the previous claim **characterised in that** the template (3) is subject to a pressure in order to ensure the entry of the pin elements (3a) in the holes (2) on the upper surface of the sole (1).

3. An injection moulded sole made of expansible and cross-linking "EVA" compounds produced with the process according to the previous claims.

## Patentansprüche

1. Verfahren zum Spritzgießen von Sohlen aus schäumbarer und vernetzbarer "EVA"-Verbindung, welches folgende Phasen umfasst:
- Einspritzen von schäumbarem und vernetzbarem "EVA"-Granulat in eine Spritzgussform, deren Abdruck zum einen so dimensioniert ist, dass die Sohle (1) bei freier und vollständiger Rückstellung nach der Entnahme aus der Spritzgussform gegenüber den Nominalmaßen der jeweiligen Schuhgröße leicht unterbemessen wäre und zum anderen ein derartiges Profil aufweist, dass die spritzgegossene Sohle auf ihrer Oberseite einen umlaufenden, erhöhten Rand (2) besitzt ;
- Anbringen einer Schablone (3) auf der Oberseite der Sohle (1), so lange diese noch warm ist und deren Abkühlprozess soeben begonnen hat, welche Schablone (3) aus einer dünnen Schicht eines flexiblen Materials besteht, dessen Steifigkeit in etwa der von Hart-PVC entspricht, wobei die Schablone ein ähnliches Profil wie das Fußbett der Sohle (1) besitzt und auf ihrer Unterseite mit einer Reihe von umlaufenden Noppen (3a) versehen ist, die in eine Reihe von entsprechenden Löchern (2) auf der Sohle (1) eingesteckt werden;
- Belassen der besagten Noppen (3a) in den Löchern (2) bis zum Ende der Abkühlphase;
- Herausnehmen der besagten Noppen (3a) der Schablone (3) aus den Löchern (2) der Sohle nach Beendigung des Abkühlvorgangs der Sohle.

2. Verfahren gemäß vorstehendem Anspruch, **dadurch gekennzeichnet, dass** die Schablone (3) so aufgepresst wird, dass ihre Noppen (3a) in die auf der Oberseite der Sohle (1) befindlichen Löcher (2) einrasten.

3. Spritzgegossene Sohle aus schäumbarer und vernetzbarer "EVA"-Verbindung, die mittels eines den obigen Ansprüchen entsprechenden Verfahrens hergestellt wird.

## Revendications

1. Procédé de moulage par injection de semelles réalisées avec des composés à base de "EVA" expansible et apte à la réticulation, dont les phases sont les suivantes:
- i'injection de granules de composés à base de "EVA" expansible et apte à la réticulation dans un moule dont l'empreinte, d'un côté, est dimensionnée de manière telle que la semelle (1), si laissée librement et entièrement retirer après avoir été démoulée du moule, atteint des dimensions légèrement inférieures par rapport à celles nominales de la pointure de référence et, de l'autre côté, est profilée de manière telle que la semelle moulée présente, en correspondance de sa face supérieure, une série de trous (2) sur son périmètre ;
- l'accrochage à la face supérieure de la semelle (1), lorsque la semelle est encore chaude et que le refroidissement est à peine commencé, d'un gabarit (3) consistant en une mince feuille flexible réalisée en un matériel dont la rigidité peut être comparée à celle du PVC rigide, ledit gabarit présentant un profil similaire à celui de la plante de la semelle (1) et duquel forjette inférieurement une série de pieux (3a) disposés sur son périmètre, aptes à être enfilés dans la correspondante série de trous (2) de la semelle (1) ;
- la permanence des dits pieux (3a) dans les trous (2) jusqu'au complet refroidissement de la semelle ;
- l'extraction des dits pieux (3a) du gabarit (3) enfilés dans les trous (2) de la semelle, lorsque le refroidissement de la semelle est terminé.

2. Procédé selon la revendication précédente, **caractérisé en ce qu'**il prévoit que le gabarit (3) est sujet à une pression, apte à garantir l'introduction de ses pieux (3a) dans les trous (2) présents sur la face supérieure de la semelle (1).

3. Semelle moulée par injection dans des composés à base de "EVA" expansible et apte à la réticulation, réalisée selon le procédé dont aux revendications précédentes.
